# EUROPEAN PATENT SPECIFICATION

(11) **EP 1 410 553 B1**
(45) Date of publication and mention of the grant of the patent: **08.11.2006**
(21) Application number: 01930398.1
(22) Date of filing: 11.05.2001
(51) Int. Cl.: H04L 5/06, H04N 7/173

(54) **COMMUNICATION APPARATUS**
KOMMUNIKATIONSVORRICHTUNG
APPAREIL DE COMMUNICATION

(30) Priority: 12.05.2000 SE 0001756
(43) Date of publication of application: 21.04.2004
(73) Proprietor: Macab AB, 231 66 Trelleborg (SE)
(72) Inventor: SAHLIN, Dan, S-118 47 Stockholm (SE); SÖDERQVIST, Rickard, S-146 52 Tullinge (SE); HAMMAR, Axel, S-172 72 Sundbyberg (SE)
(74) Representative: Herbjörnsen, Rut
(86) International application number: PCT/SE2001/001033
(87) International publication number: WO 2001/086858

(56) References cited:
- WO-A1-00/05895
- WO-A1-97/32411
- US-A- 5 608 446
- RAMANTHAN S., GUSELLA R.: 'A home network controller for providing broadband access to residential subscribers' IEEE TRANSACTIONS ON CONSUMER ELECTRONICS vol. 41, no. 3, August 1995, pages 859 - 868, XP000539546

## Description

### Technical Field

The present invention relates to data network access and in particular to providing access to a data network at relatively low cost, in particular at home.

### Description of Related Art

There is an increasing requirement for Internet connections from people's homes, both to enable working at home and for private use. A common solution is using modems and the ordinary telephone lines. This solution has two severe drawbacks: the telephone line is busy for the whole duration of the connection and the bandwidth is very low.

It is known in the art to use a cable-TV (CATV) network for the connection from a building to the external data network. TV signals and data, for example according to the Ethernet protocol, can share a transmission medium, since the TV signals and the data signals are transmitted on different frequencies and can therefore easily be separated. Each subscriber then has a CATV modem, which extracts the data signal and forwards it to the subscriber's computer.

CATV modems are relatively expensive. Also, the subscriber effectively shares the bandwidth of the in-house network with all the other subscribers in the house, since all data is transported to everybody and the selection of relevant data is made in each subscriber's CATV modem or computer.

Another solution known in the art is to build a separate new network for data communication, not using any part of the CATV network. For an office environment this is the standard solution. For residential access the wiring cost may be prohibitively high.

WO 00/05895 describes an apparatus and a method for providing data connections using an existing CATV network in a building wherein the apparatus may be implemented using only passive components, such as filters. The apparatus disclosed in WO 00/05895 comprises a first input terminal adapted to receive a CATV signal, a second input/output terminal adapted to receive and transmit a data signal and a third input/output terminal adapted to receive and transmit a combined CATV and data signal, a high-pass filter on the first input/output terminal, a low-pass filter on the second input terminal and a combining unit connected to the high-pass filter, the low-pass filter and the third input/output terminal. Usually, it also comprises an impedance converting unit or a balun, connected between the second input/output terminal and the low-pass filter to adapt the impedances on the different inputs and outputs to each other.

The method and apparatus of WO 00/05895 utilize the fact that the Ethernet baseband signal and the CATV signal effectively occupy different frequency bands and therefore can be combined without modulation.

When used for the distribution of data to and/or from at least one computer, the method disclosed in WO 00/05895 involves the following steps in the direction towards the computer:
- combining a baseband data signal with a CATV signal to a combined signal;
- transmitting the combined signal to at least one flat using a CATV cable;
- splitting the combined signal into a baseband data signal and a TV signal;
- transmitting the data signal to the computer and the TV signal to a television set; and, in the direction from the computer:
- transmitting data from the computer along the same path as the combined signal but in the opposite direction.

In this case the apparatus comprises the following:
- means for receiving an incoming CATV signal;
- means for receiving a data signal;
- means for combining the incoming data signal and the incoming CATV signal to a combined signal;
- means for transmitting said combined signal to at least one subscriber;
- means for splitting the combined signal into a data signal and a CATV signal;
- means for receiving an outgoing baseband data signal from at least one computer and transmitting said outgoing baseband data signal.

In this way the data can be distributed using existing resources, that is, cables already present, which means that the network can be implemented in an inexpensive way. The method and apparatus according to the invention also makes it fairly inexpensive to add new users to the data network.

When an Ethernet hub is used all data is transmitted to all flats and the selection of data intended for a particular computer is carried out in the computer.

Alternatively a switch may be used to distribute the data, in which case only the data intended for the computer or computers connected in the same chain is transmitted to each computer.
In this way, the users do not have to share the same bandwidth, which means that each user can effectively use the entire bandwidth available for data communication.

In a preferred embodiment, the incoming data signal shares an incoming cable with the TV signal, and the data signal and the TV signal are demodulated in a CATV modem before the combination of the signals.

The solution suggested in WO 00/05895 for enabling cascade configurations is to use a transceiver at each subscriber's location. The data signal is branched to a subscriber's computer through a transceiver. Also, where the signal is branched to a subscriber, the transceiver must be connected very close to the branching point, which represents a problem.

### Object of the Invention

It is an object of the present invention to provide a method and an apparatus for connecting end users to a data network, especially the Internet, when the subscribers are connected in a cascade configuration. The apparatus should be inexpensive and easy to maintain.

### Summary of the Invention

This object is achieved according to the invention by a communication unit comprising a first and second splitting/combining device, each splitting/combining device having a first and a second terminal for receiving and transmitting a CATV signal and a data signal, respectively, combining means for combining the CATV signal and the data signal received on the first and second terminals to a combined signal and a third terminal for receiving and transmitting the combined signal wherein the first terminals of the first and second splitting/combining device are interconnected through a device for extracting said CATV signals to a TV outlet and each of said second terminals is connected to a switch controlled in such a way that the second terminals are either connected to each other through a first path or connected to a connection device through a second path, for establishing a connection to a computer.

With the solution according to the invention, a direct connection of the data signal through the flats in which no data connection is desired is enabled, thus reducing the attenuation in the cascade. Also, it enables the implementation of the communication unit in two parts: one wall mounted part and one adapter connectable to the wall mounted part. The adapter then comprises the connection device, which is needed only for subscribers who want to have a data connection. Therefore, subscribers who only want the CATV connection do not have to pay for the connection device, which is the most expensive component.

The first and second splitting/combining device may further comprise a fourth terminal for receiving and transmitting a power signal, the fourth terminals of each splitting/combining device being interconnected. In this way the power to the adapter may be supplied by the same connection as the CATV and data signals.

The connection device may comprise an Ethernet switch, in which case the second path passes through the Ethernet switch. Alternatively, it may comprise a transceiver, in which case the second path is branched to the transceiver. If an Ethernet switch is used, no conversion is required since the Ethernet protocol is supported in the switch. Also, Ethernet switches usually have at least four ports, thereby enabling connection of two or more computers to the network through one Ethernet switch. Transceivers are somewhat less expensive than Ethernet switches, but on the other hand require conversion between the AUI format used in the transceiver and the Ethernet protocol.

In one embodiment the switches are electrical switches, more specifically relays controlled by a solenoid.

In a preferred embodiment, the switches are controlled in such a way that when the adapter unit is connected to the wall unit the second terminals are interconnected through the second path. The solenoid may be controlled by the power signal, or by an external power signal.

This embodiment enables the automatic connection and disconnection of the data connection to the flat, without interrupting the cascade in a flat in which the data connection is disconnected. Also, a more economic construction is achieved, since the Ethernet switch can be placed in a separate, plug-in unit, which only those who really want a data connection need to have.

The transceiver embodiment, enables the connection of the transceiver close to the branching point for the data signal, which is a prerequisite for this embodiment to work.

The power signal may be used to control the solenoid in such a way that when the connection device is connected the second terminals are interconnected through the second path.

### Brief Description of the Drawings

Figure 1 is a general overview of a cascade network according to the invention;
Figure 2 shows a general splitting/combining apparatus according to the invention;
Figure 3 is a general overview of an embodiment of the invention;
Figure 4 is a more detailed view of a first preferred embodiment of the invention;
Figure 5 is a more detailed view of a second preferred embodiment of the invention;
Figure 6 shows an embodiment of the invention for use in the last flat of a cascade;
Figure 7 shows a third preferred embodiment of the invention.

### Detailed Description of Embodiments

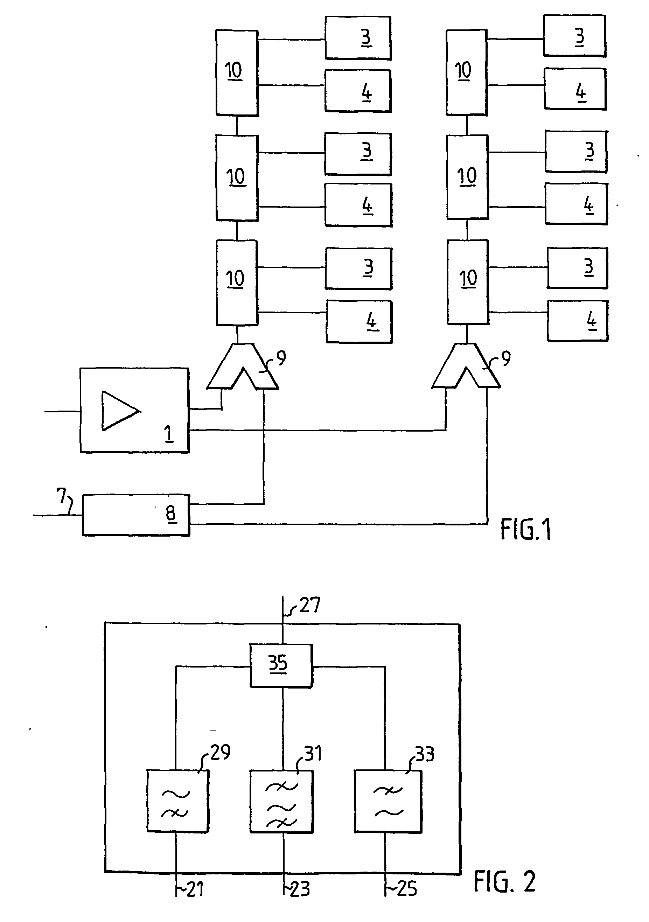

Figure 1 shows a preferred embodiment of the invention applied to a cascade coupled network like the one shown in Figure 1B of WO-A-00/05 895. A CATV amplifier 1 is used for receiving the TV signal from the CATV network. From the amplifier 1 the TV signal is distributed to a number of flats, each having a television set 3 and a personal computer 4.

In this embodiment, a separate data network 7 is used for the data communication outside the house. The incoming data from the data network 7 is distributed, in a distribution device 8, to each flat by the in-house CATV network. The distributing device 8 may be a hub which simply distributes the same signal on a number of outputs, or a switch, which switches the incoming data so that only the data intended for the subscribers connected to a particular cascade is transmitted on this cascade. In Figure 1, two cascades are shown. Only one, or an arbitrary number may be used.

To enable the distribution of data signals through the CATV network, a connecting device 9 is added to each of the cables connecting the amplifier 1 to the television sets 3. Normally there will be several connecting devices 9, each connected separately to the CATV amplifier and to the distributing device 8. A receiving unit 10 is used in each flat to receive the combined signal, split it into a data signal and a TV signal, distribute the signals to the television set and the computer, respectively, combine the signal back together and pass it on to the next flat. The connecting device 9 may comprise a transceiver or an Ethernet switch. If a transceiver is used the same data is transmitted to all subscribers. If an Ethernet switch is used, it can learn with time which data should be transmitted to which subscriber, and pass on only data intended for the subscribers connected higher up in the cascade. This is a standard function in an Ethernet switch and is well known to the person skilled in the art.

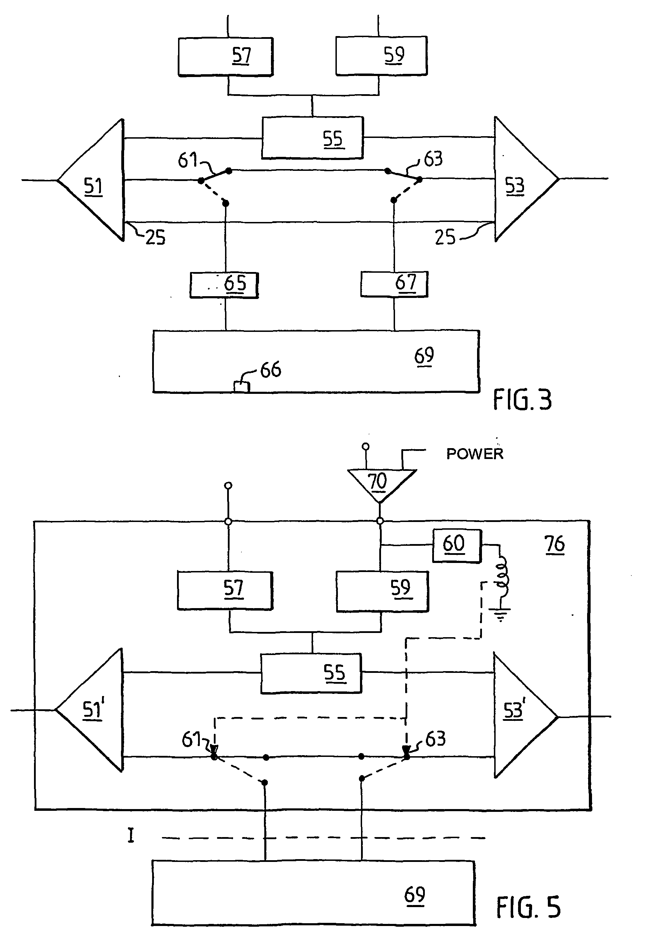

The receiving unit 10 in each flat receives the combined signal comprising both the data signals from the data network 7 and the TV signals from the CATV amplifier 1, splits it into the component signals and outputs both component signals. In the opposite direction, the connecting device receives both the data signal and the TV signal and combines them into a combined signal. The combined signal may also comprise a power supply component, which may be, for example, DC or 50Hz or 60Hz AC. Embodiments of the connecting device are shown in Figures 3, 4 and 5.

Figure 2 shows a preferred embodiment of a component of the basic splitting/combining device used in the connecting device 9 of Figure 1. The splitting/combining device has a first terminal 21 for receiving the TV signal, a second terminal 23 for receiving and transmitting the data signal, a third terminal 25 for a power signal and a fourth terminal 27 for receiving and transmitting the combined signal. The data signal is received on the second terminal 23 either from the distributing device 8 or from a subscriber's computer. The TV signal is received on the first terminal 21 from the CATV amplifier 1 or, if upstream communication is allowed in the CATV network, from a TV of a subscriber. The power signal received on the third terminal 25 is used to power feed the switch or transducer used according to the invention. Alternatively, the third terminal 25 may not be used, in which case the switch or transducer must be powered from another source. The combined signal is transmitted on the in-house CATV network.

Cable television channels are traditionally transmitted on frequencies higher than 47MHz, while data signals are usually transmitted using frequencies lower than 25MHz. On the first terminal 21, therefore, a high-pass filter 29 is placed to filter out the data signals and the power signal, if present, and pass on the TV signal. On the second terminal 23 a bandpass filter 31 is placed to filter out the television signal and the power signal and pass on the data signal. On the third terminal 25 a low-pass filter 33 is placed to filter out everything except the power signal. Alternatively, if there is no power signal, the third terminal 25 and the low-pass filter 33 may not be present. In this case, the bandpass filter 31 may instead be a low-pass filter. The filters 29, 31, 33 are connected to a splitting/combining unit 35 in which the three signals are combined. The appropriate frequencies may be selected dependent on the signal frequencies. It would even be possible to omit the TV channels occupying the lowest frequencies, to enable higher rate data traffic, since the CATV operator can choose which channels to use and may choose not to transmit anything on, for example, the lowest channels.

The impedance on the four connections may differ. This may be compensated for in the filters, or one or more terminals may comprise an impedance converter. To rebalance the signal, and to separate the transmit and receive Ethernet signals, a balun (not shown) may be used on the second terminal 23.

Figure 3 shows a first preferred embodiment of the connecting device 9 according to the invention. The connecting device comprises a first and a second splitting/combining device 51, 53 like the one shown in Figure 2, each of which receives a combined signal comprising a high frequency CATV signal, a data signal and a power signal and splits it into its three components, and in the opposite direction combines the three components to one signal. The first splitting/combining device 51 receives combined signals in the direction from the distribution device 8 (see Fig. 1) and passes on the signal components to the second splitting/combining device 53 as will be described below. It also transmits combined signals towards the distribution device 8. The second splitting/combining device 53 receives combined signals in the direction towards the distribution device 8 (see Fig. 1), i.e. from subscribers farther up in the cascade and passes on the components to the first splitting/combining device. It also transmits combined signals in the direction from the distribution device, i.e. to subscribers connected after it in the cascade.

From the first terminal of the first splitting/combining device, the CATV signal is forwarded to a directional coupler 55 in which a TV signal and, if applicable, a radio signal are extracted through a TV filter 57 and a radio filter 59, respectively. The CATV signal is also forwarded from the directional coupler 55 to the second splitting/combining device 53. In the case of bidirectional CATV signals, of course, the signal may be transmitted in both directions through the directional coupler 55. The handling of the TV and radio signals is well known in the art and will not be discussed in any detail here.

The second terminal of each of the first and second splitting/combining device 51, 53 is connected to a switch 61, 63, respectively. The switches 61, 63 are preferably electrical switches. In a first position, shown by solid lines, the electrical switches 61, 63 are set to connect the second terminals directly to each other. In a second position, shown by dashed lines, the switches connect the second terminal 23 of each splitting/combining device 51, 53, preferably through baluns 65, 67, to an Ethernet switch 69, which thereby receives the data signal. The Ethernet switch 69 receives data signals from both the first and the second splitting/combining device 51, 53 and forwards them to a computer (not shown) connected on one of its ports 66. In the opposite direction, the Ethernet switch 69 forwards data from the computer to the first and/or second splitting/combining device 51, 53 when the electrical switches 61, 63 are in the second position.

The third terminals 25 of the first and second splitting/combining device 51, 53, respectively are interconnected. The power signal is also used to power the Ethernet switch 69.

The Ethernet switch 69 used is a conventional Ethernet switch, which is well known in the art. For the basic embodiment, in which one computer can be connected for each subscriber, only three ports on the Ethernet switch are used. A four or five port Ethernet switch may of course be used, in which case two or three computers for each subscriber may be connected, if desired.

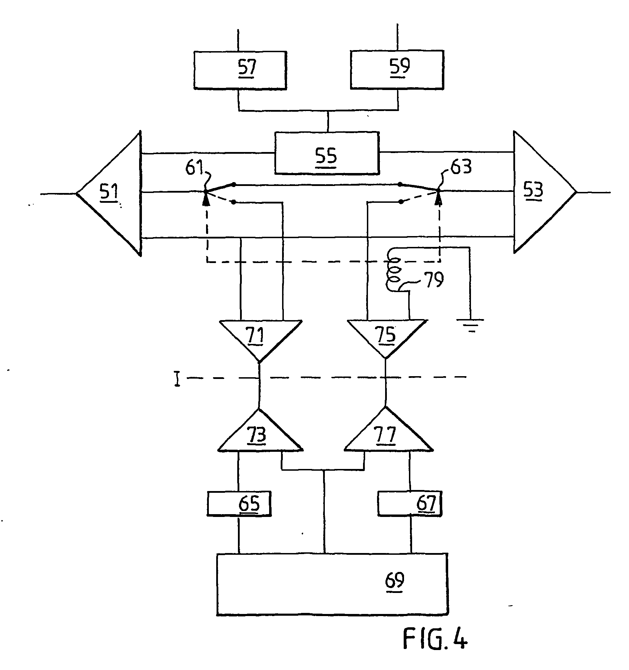

Preferably, the electrical switches 61, 63 are relays controlled by a solenoid, for example, as shown in Figure 4. In the embodiment shown in Figure 4, the solenoid is powered from the power signal received as part of the combined signal. In this case, the solenoid is always powered when the Ethernet switch is connected. Alternatively, the connection may be implemented in such a way that the solenoid is only powered if the adapter is actually in operation. To do this, the supervision function of the Ethernet switch may be used, for example, to register whether or not a computer is connected to the Ethernet switch.

Instead of the electrical switches 61, 63, mechanical switches could be used. In this case, the switches could only sense whether or not the Ethernet switch was connected, not if it was working or not.

Figure 4 shows a practical implementation of the embodiment shown in Figure 3. In Figure 4, the CATV signal on the first terminal is handled in the same way as in Figure 3. The power signal and the data signal received from the first splitting/combining device 51 are combined in a power signal filter unit 71 similar to the splitting/combining device 51, without the first terminal, i.e. with only the terminals used for the power component and the data component, respectively. The signal consisting of the power component and the data component is then received in a similar power signal filter unit 73 and split in a data component which is fed to the Ethernet switch 69 and a power component, which is used to power the Ethernet switch 69. In a similar way, the second terminal of the second splitting/combining unit 53 is connected through a third 75 and a fourth power signal filter unit 77 to the Ethernet switch 69. The power component is received in the fourth power signal filter unit 77 from the second power signal filter unit 73 and passed, combined with the data signal, to the third power signal filter unit 75 which separates the power signal and the data signal, the data signal being passed to the second terminal of the second splitting/combining device 53 and the power signal being used to power the solenoid 79 which controls the relays 61, 63.

With this configuration, the first and second splitting/combining devices 51, 53, the directional coupler 55 and TV and radio filters 57, 59, the power signal filter 71, 75, and the electrical switches 61, 63 may be comprised in one unit, preferably in the wall outlet, and the Ethernet switch 69 may be comprised in a second, separate adapter unit, connectable to the wall outlet, the connection point being the point between the power signal filter units 71, 73 and 75, 77, respectively. In this way, a subscriber who does not want a data connection will only need to have the first unit, which is the less expensive part, and will not need to have the more expensive adapter unit comprising an Ethernet switch or a transceiver. If the separate adapter unit is not connected, the switches will be set to direct the data signal directly from the first to the second splitting/combining device. A dashed line I in Figure 4 indicates the border between the wall outlet unit and the separate adapter unit.

In Figure 4, the power signal is connected directly between the second 73 and the fourth power signal filter unit 77. In this way, whenever the adapter unit is connected, the solenoid 79 will have power. A more sophisticated implementation would be to connect each of the second and fourth power signal filter units 73, to the Ethernet switch 69 without a direct connection between them. By letting a logical unit in the Ethernet switch participate in the connection between the power signal filter units 73, 77, it could be ensured that the fourth power signal filter unit 77 would only receive a power signal when the Ethernet switch 69 was functioning.

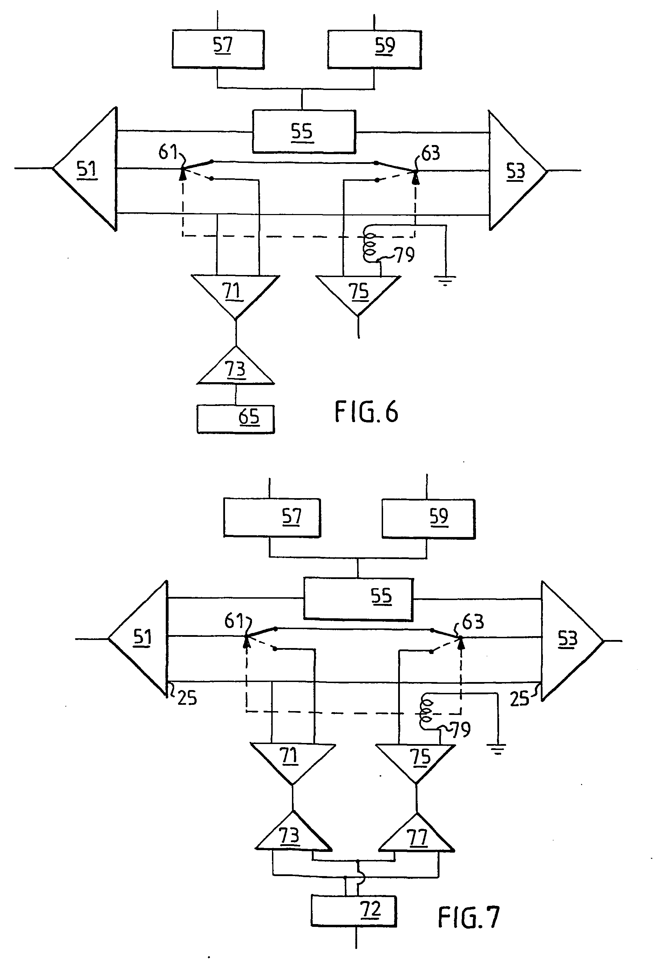

Figure 5 shows an alternative embodiment. As in Figures 3 and 4, a first and a second splitting/combining device 51, 53 are used, the radio and TV signals being extracted in a directional coupler 55 and the data signal being connected either directly between the splitting/combining devices 51, 53 or through an Ethernet switch 69, by means of relays 61, 63. In this embodiment, the signal received from the distribution unit does not comprise a power component. The solenoid controlling the relays 61, 63 must therefore be powered from an external source. This external source in Figure 5 is an external power signal, preferably from from the Ethernet switch 69, which is in this case also powered from an external source. The power signal taken from the Ethernet switch 69 is supplied to the radio connection through a power filter 70, and extracted by means of a diplex filter 60 connected between the radio filter 59 and the power filter 70, as shown in Figure 5. Alternatively, the power component may be extracted from the TV signal, in exactly the same way. In this embodiment, preferably, the first and second splitting/combining devices 51', 53', the directional coupler 55 and TV and radio filters 57, 59, the power signal filter 71, 75, and the electrical switches 61, 63 may be comprised in one unit, denoted 76, as discussed in connection with Figure 4, and the power filter 70 and the connection device 69 may be comprised in a connectable adapter unit.

In this embodiment, the relays 61, 63 are not automatically set to forward the data signal to the Ethernet switch 69 if it is connected. Therefore, control logic is required to ensure that the relays 61, 63 are set correctly. Of course, the solenoid may be powered from the radio signal even if the combined signal has a power component as in Figure 3 or 4.

Figure 6 shows an alternative embodiment which may be used for the last subscriber in each cascade. From the last subscriber in a cascade, of course, there is no need to forward the signal, and so only a balun 65 is needed between the first splitting/combining device and the computer (not shown). Figure 6 still shows the first unit comprising the same components as before, as this will usually be a standard wall outlet.

Figure 7 shows an alternative embodiment using a transceiver. The first and second splitting/combining device 51, 53, the directional coupler and the connections between the second and third terminals, respectively, of the first and second splitting/combining device are as before. The power signal filter units 71, 73 are used in the same way as in Figure 4, to enable the division of the apparatus according to the invention into a first and a second unit.

When the switches are in their first position, indicated by a solid line, the second terminals of the first and second splitting/combining device are interconnected by a first cable, preferably drawn within the first unit, directly between the terminals. When the switches are in their second position, indicated by a dashed line, the second terminals are connected through a second cable, drawn through the second, connectable unit. From the second cable, the data signal is branched to a transceiver 72. In the embodiment shown in Figure 7, the transceiver 72 is powered from the power signal extracted in the first splitting/combining device 51 and forwarded to the transceiver through the power signal filter units 71, 73. A solenoid, driven by the power signal is used to control the switches, in the same way as in Figure 4.

Of course, the transceiver, and the solenoid controlling the switches could be powered from another power source, for example, if the combined signal did not have a power signal component.

Although in this document some embodiments have been discussed only on the basis of one type of connection device, i.e. an Ethernet switch or a transceiver, it would be obvious to the skilled person that minor modifications only would be required to replace one with the other.

## Claims

1. A communication unit comprising a first and second splitting/combining device (51, 53), each splitting/combining device having a first (21) and a second terminal (23) for receiving and transmitting a CATV signal and a data signal, respectively, combining means (35) for combining the CATV signal and the data signal received on the first and second terminals (21, 23) to a combined signal and a third terminal (27) for receiving and transmitting the combined signal
wherein the first terminals (21) of the first and second splitting/combining device are interconnected through a device (55) for extracting said CATV signals to a TV outlet and and **characterized in that** each of said second terminals is connected to a switch controlled in such a way that the second terminals (23) are either connected to each other through a first path or connected to a connection device (69; 72) through a second path, for establishing a connection to a computer.

2. A communication unit according to claim 1, wherein said first and second splitting/combining device (51, 53) further comprises a fourth terminal (31) for receiving and transmitting a power signal, the fourth terminals of each splitting/combining device (51, 53) being interconnected.

3. A communication unit according to claim 1 or 2, wherein the connection device comprises an Ethernet switch (69), the second path passing through the Ethernet switch.

4. A communication unit according to claim 1 or 2, wherein the connection device comprises a transceiver, the second path being branched to the transceiver.

5. A communication unit according to claim 1, 2, or 3, wherein the switches are relays controlled by a solenoid (79).

6. A communication unit according to any one of the preceding claims, wherein the connection device (69; 72) is implemented in an adapter unit disconnectable from a wall unit comprising the splitting/combining devices (51, 53),

7. A communication unit according to claim 6, wherein the power signal is used to power the connection device when connected.

8. A communication unit according to claim 6 or 7, wherein the switches (61, 63) are controlled in such a way that when the adapter unit is connected to the wall unit the second terminals are interconnected through the second path.

9. A communication unit according to any one of the claims 5-8, wherein the power signal is used to control the solenoid.

10. A communication unit according to claim 9, wherein the power signal is supplied to the solenoid only when the adapter unit is in function.

11. A communication unit according to claim 9 or 10, wherein the power signal is used to control the solenoid in such a way that when the connection device is connected the second terminals are interconnected through the second path.

## Patentansprüche

1. Kommunikationseinheit, eine erste und zweite Aufspaltungs-/Kombinierungs-Einrichtung (51, 53) umfassend, wobei jede Aufspaltungs-/Kombinierungs-Einrichtung mindestens einen ersten (21) und einen zweiten Anschluss (23) hat zum empfangen und Senden eines CATV-Signals und eines Datensignals, eine Kombiniereinrichtung (35) zum Kombinieren des CATV-Signals und des Datensignals, die von den ersten und zweiten Anschlüssen (21, 23) empfangen worden sind, zu einem kombinierten Signal, und einen dritten Anschluss (27) zum Empfangen und Senden des kombinierten Signals,
wobei der erste Anschluss (21) der ersten und zweiten Aufspaltungs-/Kombinierungs-Einrichtung über eine Einrichtung (55) miteinander verbunden sind zum Extrahieren des CATV-Signals zu einem TV-Auslass und **dadurch gekennzeichnet sind, dass** jeder der zweiten Anschlüsse mit einem Schalter verbunden ist, der derart gesteuert wird, dass die zweiten Anschlüsse (23) entweder über einen ersten Pfad miteinander verbunden sind oder über einen zweiten Pfad mit einer Verbindungseinrichtung (69, 72) verbunden sind zum Einrichten einer Verbindung zu einem Computer.

2. Kommunikationseinheit nach Anspruch 1, wobei die ersten und zweiten Aufspaltungs-/Kombinierungs-Einrichtungen (51, 53) ferner einen vierten Anschluss (31) umfassen zum Empfangen und Senden eines Leistungssignals, wobei die vierten Anschlüsse jeder Aufspaltungs-/Kombinierungs-Einrichtung (51, 53) miteinander verbunden sind.

3. Kommunikationseinheit nach Anspruch 1 oder 2, wobei die Verbindungseinrichtung eine Ethernet-Schalteinrichtungung (69) umfasst, wobei der zweite Pfad durch die Ethernet-Schalteinrichtungung verläuft.

4. Kommunikationseinheit nach Anspruch 1 oder 2, wobei die Verbindungseinrichtung einen Sender-Empfänger umfasst, und wobei der zweite Pfad zu dem Sender-Empfänger abzweigt.

5. Kommunikationseinheit nach Anspruch 1, 2 oder 3, wobei die Schalter durch eine Spule (79) gesteuerte Relais sind.

6. Kommunikationseinheit nach einem der vorhergehenden Ansprüche, wobei die Verbindungseinrichtung (69; 72) in einer Adaptereinheit implementiert ist, die von einer Wandeinheit trennbar ist, welche die Aufspaltungs-/Kombinierungs-Einrichtung (51, 53) umfasst.

7. Kommunikationseinheit nach Anspruch 6, wobei das Leistungssignal dazu verwendet wird, die Verbindungseinheit, wenn sie verbunden ist, mit Energie zu versorgen.

8. Kommunikationseinheit nach Anspruch 6 oder 7, wobei die Schalter (61, 63) auf solche Weise gesteuert werden, dass wenn die Adaptereinheit mit der Wandeinheit verbunden ist, die zweiten Anschlüsse über den zweiten Pfad verbunden sind.

9. Kommunikationseinheit nach einem der Ansprüche 5-8, wobei das Leistungssignal zum Steuern der Spule verwendet wird.

10. Kommunikationseinheit nach Anspruch 9, wobei das Leistungssignal den Spulen nur zugeführt wird, wenn die Adaptereinheit in Funktion ist.

11. Kommunikationseinheit nach Anspruch 9 oder 10, wobei das Leistungssignal zum derartigen Steuern der Spule verwendet wird, dass wenn die Verbindungseinrichtung verbunden ist, die zweiten Anschlüsse über den zweiten Pfad verbunden sind.

## Revendications

1. Unité de communication comprenant des premier et deuxième dispositifs séparateurs/combineurs (51, 53), chaque dispositif séparateur/combineur comprenant une première borne (21) et une deuxième borne (23) pour recevoir et transmettre un signal de câblodistribution et un signal de données, respectivement, un moyen de combinaison (35) pour combiner le signal de câblodistribution et le signal de données reçus sur les première et deuxième bornes (21, 23) en un signal combiné, et une troisième borne (27) pour recevoir et transmettre le signal combiné;
dans laquelle les premières bornes (21) des premier et deuxième dispositifs séparateurs/combineurs sont interconnectées par un dispositif (55) servant à extraire lesdits signaux de câblodistribution vers une prise TV et **caractérisée en ce que** chacune desdites deuxièmes bornes est connectée à un commutateur commandé de telle manière que les deuxièmes bornes (23) sont soit connectées l'une à l'autre par un premier trajet soit connectées à un dispositif de connexion (69; 72) par un deuxième trajet, en vue d'établir une connexion à un ordinateur.

2. Unité de combinaison selon la revendication 1, dans laquelle lesdits premier et deuxième dispositifs séparateurs/combineurs (51, 53) comprennent en outre une quatrième borne (31) pour recevoir et transmettre un signal d'alimentation, les quatrièmes bornes de tous les dispositifs séparateurs/combineurs (51, 53) étant interconnectées.

3. Unité de communication selon la revendication 1 ou 2, dans laquelle le dispositif de connexion comprend un commutateur Ethernet (69), le deuxième trajet passant par le commutateur Ethernet.

4. Unité de communication selon la revendication 1 ou 2, dans laquelle le dispositif de connexion comprend un émetteur-récepteur, le deuxième trajet étant branché sur l'émetteur-récepteur.

5. Unité de communication selon la revendication 1, 2 ou 3, dans laquelle les commutateurs sont des relais commandés par un électroaimant à noyau-plongeur (79).

6. Unité de communication selon l'une quelconque des revendications précédentes, dans laquelle le dispositif de connexion (69; 72) est mis en oeuvre dans une unité d'adaptation déconnectable d'une unité murale comprenant les dispositifs séparateurs/combineurs (51, 53).

7. Unité de communication selon la revendication 6, dans laquelle le signal d'alimentation est utilisé pour alimenter le dispositif de connexion quand il est connecté.

8. Unité de communication selon la revendication 6 ou 7, dans laquelle les commutateurs (61, 63) sont commandés de telle manière que quand l'unité d'adaptation est connectée à l'unité murale, les deuxièmes bornes sont interconnectées par le deuxième trajet.

9. Unité de communication selon l'une quelconque des revendications 5 à 8, dans laquelle le signal d'alimentation est utilisé pour commander l'électroaimant.

10. Unité de communication selon la revendication 9, dans laquelle le signal d'alimentation n'est appliqué à l'électroaimant que quand l'unité d'adaptation est en service.

11. Unité de communication selon la revendication 9 ou 10, dans laquelle le signal d'alimentation est utilisé pour commander l'électroaimant de telle manière que quand le dispositif de connexion est connecté, les deuxièmes bornes sont interconnectées par le deuxième trajet.
